# EUROPÄISCHE PATENTANMELDUNG

(11) **EP 2 068 123 A2**
(43) Veröffentlichungstag der Anmeldung: **10.06.2009**
(21) Anmeldenummer: 08017947.6
(22) Anmeldetag: 14.10.2008
(51) Int. Cl.: G01C 21/36, G10L 13/04

(54) **Verfahren zum Betrieb eines Navigationsgeräts**

(30) Priorität: 04.12.2007 DE 102007058651
(71) Anmelder: Navigon AG, 20251 Hamburg (DE)
(72) Erfinder: Katzer, Jochen, 91605 Gallmersgarten OT Bergtshofen (DE); Schmidt, Thorsten W., 97318 Kitzingen (DE); Kahlow, Matthias, 97072 Würzburg (DE)
(74) Vertreter: von den Steinen, Axel

(57) **Zusammenfassung**

Die Erfindung betrifft ein Verfahren zum Betrieb eines Navigationsgeräts, umfassend
- eine Eingabeeinrichtung, an der Bedienerbefehle und/oder Ortsangaben, insbesondere Startpunkte und/oder Zielpunkte, eingegeben werden können,
- eine Wegenetzdatenbank,
- eine Routenberechnungseinheit zur Berechnung einer geplanten Route unter Berücksichtigung der Ortsangaben und der Wegenetzdatenbank, wobei die Route vom Startpunkt zum Zielpunkt führt,
- eine Signalempfangseinheit zum Empfang von Positionssignalen, insbesondere GPS-Signalen,
- eine Positionsermittlungseinheit, die die aktuelle Position aus den Positionssignalen bestimmt,
- ein Sprachausgabemodul, das in Abhängigkeit vorgegebener Randbedingungen eine Sprachmitteilung, insbesondere Manöveranweisungen, durch Kombination von zumindest zwei Sprachmitteilungselementen erzeugen und akustisch ausgeben kann, wobei vor der akustischen Ausgabe der Sprachmitteilung die zu kombinierenden Sprachmitteilungselemente analysiert werden, wobei die Sprachmitteilung gemäß vorgegebenen Priorisierungsregeln in Abhängigkeit des Analyseergebnisses verändert wird.

## Beschreibung

Die Erfindung betrifft ein Verfahren zum Betrieb eines Navigationsgeräts nach dem Oberbegriff des Anspruchs 1.

Gattungsgemäße Navigationsgeräte, bei denen es sich beispielsweise um mobile Navigationsgeräte zur Verwendung in Kraftfahrzeugen oder um Mobiltelefone mit entsprechend installierter Navigationssoftware handeln kann, werden dazu eingesetzt, den Benutzer von einem Startpunkt zu einem Zielpunkt zu führen. Bei den aus dem Stand der Technik bekannten Geräten ist dabei üblicherweise ein Bildschirm vorgesehen, um über diese Benutzerschnittstelle Anweisungen bzw. Menüs anzeigen zu können. Außerdem ist es bei bekannten Navigationsgeräten vielfach üblich, dass zusätzlich eine akustische Benutzerschnittstelle vorhanden ist. Über diese akustische Benutzerschnittstelle können Textmitteilungen in akustischer Form angesagt werden, was insbesondere bei der Benutzung in Kraftfahrzeugen von Vorteil ist. Zur Erzeugung dieser Sprachmitteilungen werden Sprachausgabemodule eingesetzt, die aus einer Vielzahl von einzelnen Sprachmitteilungselementen bestehen, die in einer Datenbank gespeichert sind, die jeweils aktuelle Sprachmitteilungen durch Kombination von zumindest zwei verschiedenen Sprachmitteilungselementen erzeugen. Dadurch kann unter Verwendung einer relativ begrenzten Anzahl von verschiedenen Sprachmitteilungselementen kombinatorisch eine sehr große Anzahl von verschiedenen Sprachmitteilungen erzeugt werden. Die einzelnen Sprachmitteilungselemente können dabei entweder elektronisch aus Texten erzeugt werden (Text-to-Speech), oder es kann sich bei den Sprachmitteilungselementen um einzelne akustische Sprachsequenzen handeln.

Aus der EP 0 722 559 B1 ist ein Navigationsgerät bekannt, bei dem Sprachmitteilungen aus mehreren Sprachmitteilungselementen kombiniert werden.

Bei den bekannten Navigationsgeräten werden die aktuellen Sprachmitteilungen zunächst durch Kombination einzelner Sprachmitteilungselemente erzeugt und anschließend als Kette von Sprachmitteilungselementen in einem Zwischenspeicher als Kette von abzuhandelnden Aktionen abgelegt. Entsprechend ihrer Reihenfolge werden die einzelnen Sprachmitteilungselemente aus dem Zwischenspeicher abgerufen und akustisch ausgegeben. Nach der akustischen Ausgabe werden die einzelnen Sprachmitteilungselemente aus dem Zwischenspeicher gelöscht. Der Zwischenspeicher mit den darin gespeicherten aktuellen Sprachmitteilungselementen wird also in der Art eines FIFO-Speichers (First In First Out) betrieben.

In bestimmten Situationen kann es jedoch vorkommen, dass es sinnvoll ist, einzelne Sprachmitteilungselemente aus der Sprachmitteilung zu löschen bzw. die Reihenfolge zu verändern. Überschreitet der Fahrer beispielsweise die aktuell zulässige Höchstgeschwindigkeit, so ist es nicht sinnvoll, die entsprechende Warnmeldung zurückzuhalten, bis alle bereits im Zwischenspeicher abgelegten akustischen Sprachmitteilungselemente abgearbeitet und ausgegeben sind.

Außerdem stellt sich bei der akustischen Sprachausgabe ganz grundsätzlich das Problem, dass die Balance zwischen Informationsgehalt und Aktualität gefunden werden muss. Hat der Fahrer beispielsweise mehrere Manöver nacheinander durchzuführen, so sind kurze und prägnante Anweisungen sinnvoll. Stehen dagegen weniger Manöver bevor, so sollte das System den vollen Informationsumfang zur Verfügung stellen. Beispielsweise ist die Ausgabe von den einzelnen Manövern zugeordneten Straßennamen nur dann sinnvoll, wenn entsprechend viel Zeit für die Sprachausgabe der einzelnen Manöveranweisungen zur Verfügung steht.

Die Sprachmitteilungen von bekannten Navigationsgeräten können nicht differenziert auf unterschiedliche Situationen angepasst werden.

Ausgehend von diesem Stand der Technik ist es deshalb Aufgabe der vorliegenden Erfindung, ein Navigationsgerät mit verbesserter Sprachausgabe vorzuschlagen.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass vor der akustischen Ausgabe der Sprachmitteilung die zu kombinierenden Sprachmitteilungselemente analysiert werden. Außerdem werden Priorisierungsregeln ausgewertet, um die Sprachmitteilung gemäß den Randbedingungen der Priorisierungsregeln verändern zu können.

In welcher Art die Analyse der zu kombinierenden Sprachmitteilungselemente vorgenommen wird, ist grundsätzlich beliebig. Besonders vereinfacht wird die Analyse, wenn einzelnen Sprachmitteilungselementen Priorisierungsparameter zugeordnet werden. Während der Erzeugung bzw. Abarbeitung einer Sprachmitteilung können dann die Priorisierungsparameter aller aktuellen Sprachmitteilungen analysiert werden, um die dann akustisch auszugebende Sprachmitteilung gemäß vorgegebener Priorisierungsregeln in Abhängigkeit von den aktuell aufgefundenen Priorisierungsparametern zu verändern.

In welcher Art die Sprachmitteilung durch Analyse der Priorisierungsparameter und Anwendung der vorgegebenen Priorisierungsregeln verändert wird, ist ebenfalls grundsätzlich beliebig. Nach einer ersten Verfahrensvariante kann die Veränderung der Sprachmitteilung dadurch erreicht werden, dass einzelne Sprachmitteilungselemente gelöscht werden.

Alternativ bzw. additiv dazu kann die Veränderung der Sprachmitteilung auch darin bestehen, dass ein Sprachmitteilungselement durch ein anderes Sprachmitteilungselement ersetzt wird. Dies ist insbesondere dann sinnvoll, wenn die Sprachmitteilung insgesamt zu lang ist und eine Kürzung der Sprachmitteilung durch Ersatz eines langen Sprachmitteilungselements durch ein kürzeres Sprachmitteilungselement erreicht werden kann.

Gemäß einer dritten Verfahrensvariante kann die Veränderung der Sprachmitteilung auch durch Veränderung einzelner Sprachmitteilungselemente selbst erreicht werden.

Durch die erfindungsgemäße Möglichkeit zur situationsabhängigen Änderung der Sprachmitteilungen ergibt sich eine Vielzahl neuer Anwendungsmöglichkeiten. So kann es dadurch erreicht werden, dass der Benutzer die Charakteristik der Sprachausgabe auf seine persönlichen Vorlieben abstimmt. Dazu sollte zumindest eine Priorisierungsregel vorgesehen sein, die eine im Navigationsgerät gespeicherte Benutzereinstellung beinhaltet. Diese Benutzereinstellung kann vom Benutzer jederzeit verändert werden. In Abhängigkeit von dieser Benutzereinstellung kann dann die Sprachmitteilung bei der Kombination der einzelnen Sprachmitteilungselemente verändert werden. Wünscht der Benutzer beispielsweise eher kurze und knappe Anweisungen, kann die bevorzugte Löschung von nicht so wichtigen Sprachmitteilungselementen benutzerdefiniert eingestellt werden. So ist es beispielsweise denkbar, dass der Benutzer die Ausgabe von Straßennamen grundsätzlich unterdrücken lässt.

Nach einer alternativen Anwendungsform ist vorgesehen, dass zumindest eine Priorisierungsregel eine durch den Benutzer unveränderbare Herstellereinstellung beinhaltet. Auf diese Weise hat der Hersteller die Möglichkeit, die Charakteristik der Sprachausgabe durch diese Herstellereinstellung in einfacher Weise anzupassen. Ohne die eigentliche Software für die Sprachausgabe zu verändern, können dann einzelne Funktionalitäten der Sprachausgabe abgeschaltet werden, um eine entsprechende Preisgestaltung zu rechtfertigen.

In der Berücksichtigung von Benutzereinstellungen und Herstellereinstellungen ist es besonders vorteilhaft, wenn auch Prozessparameter des Navigationsgeräts in den Priorisierungsregeln Berücksichtigung finden. Auf diese Weise kann die Sprachausgabe durch entsprechende Änderung der Sprachmitteilung in Abhängigkeit von den verschiedenen Prozessparametern des Navigationsgeräts verändert werden.

Durch die Berücksichtigung von Prozessparametern ist es beispielsweise möglich, dass Sprachmitteilungen mit einem bestimmten Positionsbezug, beispielsweise positionsbezogene Manöveransagen, auf die entsprechende Fahrsituation angepasst werden. Dies kann bevorzugt dadurch erfolgen, dass die verbleibende Fahrzeit für die Ausgabe der positionsbezogenen Sprachmitteilung prognostiziert und als Prozessparameter an das Sprachausgabemodul weitergeleitet wird. Diese verbleibende Fahrzeit kann mit der zur akustischen Ausgabe der Sprachmitteilung erforderlichen Ausgabezeit verglichen und dann die Sprachmitteilung in Abhängigkeit vom Vergleichsergebnis verändert werden. Reicht beispielsweise die verbleibende Fahrzeit nicht mehr zur akustischen Ausgabe der Sprachmitteilung aus, beispielsweise weil das anzusagende Manöver bereits in sehr kurzer Zeit erreicht wird, kann die Manöveranweisung entsprechend verändert, insbesondere gekürzt, werden. Bei der akustischen Sprachausgabe von Navigationsgeräten ist zu beachten, dass es Sprachmitteilungselemente mit hoher Wichtigkeit und Sprachmitteilungselemente mit sehr geringer Wichtigkeit gibt. Um diese unterschiedliche Bedeutung einzelner Sprachmitteilungselemente zutreffend berücksichtigen zu können, können als Priorisierungsparameter quantifizierte Priorisierungswerte, insbesondere diskrete Prioritätsstufen, verwendet werden. Diese Priorisierungswerte werden dann den einzelnen Sprachmitteilungselementen fest zugeordnet. Auf diese Weise kann während der Analyse der Priorisierungswerte der einzelnen Sprachmitteilungselemente ein Größenvergleich zwischen den verschiedenen Priorisierungswerten durchgeführt und daraus insbesondere eine geeignete Reihenfolge der verschiedenen Sprachmitteilungselemente abgeleitet werden.

Der Vergleich der verbleibenden Fahrzeit mit der zur akustischen Ausgabe erforderlichen Ausgabezeit wird erheblich vereinfacht, wenn die zur akustischen Ausgabe erforderliche Ausgabezeit der Sprachmitteilung oder einzelner Sprachmitteilungselemente bereits zusammen mit dem Inhalt der Sprachmitteilung abgespeichert ist. Die entsprechenden quantitativen Zeitwerte können dazu beispielsweise zusammen mit den Sprachmitteilungselementen in einer Datenbank gespeichert sein oder bei Text-To-Speech-Anwendungen während der Erzeugung der Sprachmitteilungselemente berechnet werden.

Besonders einfach kann die Analyse der Priorisierungsparameter der einzelnen Sprachmitteilungselemente durchgeführt werden, wenn alle aktuell ausgegebenen Sprachmitteilungselemente in einem Zwischenspeicher zwischengespeichert werden. Aus dieser Kette von aktuellen Sprachmitteilungselementen können dann abhängig von der Analyse der einzelnen Priorisierungswerte einzelne Sprachmitteilungselemente gelöscht und/oder die Reihenfolge der akustischen Ausgabe kann verändert werden.

Werden die einzelnen aktuellen Sprachmitteilungselemente als Kette in einem Zwischenspeicher zwischengespeichert, so sollte die erfindungsgemäße Analyse der Priorisierungsparameter immer dann automatisch durchgeführt werden, wenn ein neues Sprachmitteilungselement in dem Zwischenspeicher abgelegt wird. Auf diese Weise wird gewährleistet, dass die Kette von Sprachmitteilungen immer der aktuellen Priorisierungslage entspricht.

Um auf einfache Weise die Unterdrückung einzelner Sprachmitteilungselemente zu erreichen, kann diesen zu unterdrückenden Sprachmitteilungselementen ein Null-Priorisierungswert zugeordnet werden. Wünscht der Benutzer beispielsweise grundsätzlich gemäß seiner Benutzereinstellung keine Ausgabe von Straßennamen, so kann allen Straßennamen ein Null-Priorisierungswert zugeordnet werden. Bei der Sprachausgabe selber werden dann die mit der Null-Priorisierung versehenen Sprachmitteilungselemente nicht akustisch ausgegeben.

Diese Unterdrückung einzelner Sprachmitteilungselemente ist insbesondere auch dann sinnvoll, wenn ein sprachspezifisches Sprachsynthesemodul eingesetzt wird, um die Sprachmitteilungselemente in einer bestimmten Landessprache zu synthetisieren. Sollen nun Sprachmitteilungen ausgegeben werden, die einer anderen Landessprache entsprechen, so ist dies mit dem landessprachenspezifischen Sprachsynthesemodul nicht möglich. Um entsprechende Programmfehler diesbezüglich zu verhindern, kann allen Sprachmitteilungselementen, die einer anderen Landessprache als dem verwendeten Sprachsynthesemodul entsprechen, ein Null-Priorisierungswert zugeordnet werden. Diese mit dem Sprachsynthesemodul inkompatiblen Sprachmitteilungselemente werden dann ohne Weiteres unterdrückt.

Nachfolgend soll das erfindungsgemäße Verfahren anhand einfacher Beispiele beispielhaft erläutert werden:
Eine akustische Ansage eines Navigationssystems ohne Angabe von Zusatzinformationen könnte lauten:
   **"In 3 km rechts abfahren".**
Die gleiche Ansage mit Angabe von Zusatzinformationen könnte lauten:
   **"In 3 km an der Ausfahrt Köln-Süd von der Autobahn rechts abfahren".**

Für die akustische Ausgabe der beiden Mitteilungen könnte im Sprachausgabemodul des Navigationssystems eine Kette folgender Sprachmitteilungselemente zwischengespeichert werden:
**In 3 km <start2> an der Ausfahrt Köln-Süd <ende2> <start1> von der Autobahn <ende1> rechts abfahren.**

Die optionalen Mitteilungselemente "an der Ausfahrt Köln-Süd" und "von der Autobahn" sind zu Beginn bzw. am Ende jeweils durch in eckige Klammern gesetzte Marker gekennzeichnet. Die einzelnen Marker enthalten dabei zusätzliche Zahlenwerte, die die Prioritätswerte der einzelnen Mitteilungselemente charakterisieren. Die in eckige Klammern gesetzten Marker werden dabei selbst nicht akustisch ausgegeben, sondern dienen nur zur Erkennung der optionalen Ansageteile durch das Sprachausgabemodul.

Nach einem zweiten Beispiel kann im Zwischenspeicher folgende Kette von Sprachmitteilungselementen zwischengespeichert sein:
**Jetzt <start2>an der Ausfahrt <ende2> <start1> von der Autobahn <ende1> rechts abfahren <start2> in die Beethovenstraße <ende2>**.

Diese im Zwischenspeicher zwischengespeicherte Kombination von Sprachmitteilungselementen soll in Kürze ausgegeben werden. In diesem Moment wird folgende weitere Sprachmitteilung in dem Zwischenspeicher abgelegt:
**Jetzt links abbiegen <start2> in die Mozartstraße <ende2>.**

Das Sprachausgabemodul stellt fest, dass in der neuen Ansage hochpriorisierte Informationen stehen. Diese hochpriorisierten Informationen sind in der dargestellten Verfahrensvariante ohne eigene Marker zwischengespeichert. Dadurch sind eventuell schon zwischengespeicherte Sprachmitteilungselemente mit ebenfalls entsprechend hoher Priorisierung einfach in die Sprachausgabe integrierbar, da Sprachmitteilungselemente ohne Marker gültige Aussagen sind.

Um rechtzeitig die zweite Ansage ausgeben zu können, wird die früher in der Kette gestellte Ansage daraufhin überprüft, ob geringer priorisierte Ansageteile in der Ansage enthalten sind. Dabei wird festgestellt, dass zwei Komponenten mit der Priorität 2 enthalten sind. Da diese Priorität geringer ist als die höchste Priorität der nachträglich in den Zwischenspeicher gelangten Sprachmitteilung, werden diese Sprachmitteilungselemente aus dem Zwischenspeicher gelöscht.

Anschließend kann festgestellt werden, ob die erste Ansage kurz genug ist, damit nach ihrer Ausgabe noch genug Zeit verbleibt, um auch die zweite Aussage rechtzeitig auszugeben.

Die Prüfung kann anschließend auch für die Sprachmitteilungselemente mit der Priorität 1 wiederholt werden, nach Durchlaufen dieser Prüfung für die Prioritätsstufe 1 werden auch diese Sprachmitteilungselemente aus dem Zwischenspeicher gelöscht, so dass anschließend zunächst ausgegeben wird:
**"Jetzt rechts abfahren".**

Danach wird ausgegeben:
**"Jetzt links abbiegen in die Mozartstraße".**

Folgt der zweiten Ansage unmittelbar z.B. eine Warnung zu einer Geschwindigkeitsüberschreitung, könnte diese wie folgt aussehen:
**<start3> Achtung <ende3>.**

Wird nun bei der Analyse festgestellt, dass kein Teil der neuesten Ansage eine höhere Priorität als eine Komponente der vorherigen Meldung hat, wird die vorherige Meldung unverändert ausgegeben und die neueste Meldung erst nach vollständiger akustischer Ausgabe der vorhergehenden Sprachmitteilungen ausgegeben.

Eine Ansage mit alternativen Komponenten könnte folgendermaßen aussehen:
**<start1> In 153,8 Metern | In 150 Metern Gleich <ende1> rechts abfahren.**

Ist die zur Verfügung stehende Zeit für eine Sprachmitteilung sehr kurz, so wird die Sprachmitteilung zwischen den Markern komplett weggelassen. Reicht die Zeit für die Sprachausgabe jedoch noch aus, so wird je nach Länge der verbleibenden Sprachausgabezeit die Alternative zwischen den Markern gewählt, welche in der zur Verfügung stehenden Zeit noch ausgegeben werden kann.

Um die zur akustischen Ausgabe der Sprachmitteilungselemente erforderliche Ausgabezeit für jede Alternative der Sprachmitteilungselemente besser einschätzen zu können, sind im folgenden Beispiel die entsprechenden Zeitwerte (duration=Zeitwert) der einzelnen Sprachmitteilungselemente im Speicher den verschiedenen Sprachmitteilungselementen zugeordnet abgespeichert:
<start1><start option duration="4"> In 153,8 Metern<ende option> <start option duration="3 "> In 150 Metern<ende option> <start option duration="1">Gleich <ende option> <ende1>

In diesem Beispiel ist bei Auslesen der drei alternativen Sprachmitteilungselemente unmittelbar bekannt, dass das erste und ausführlichste Sprachmitteilungselement (in 153,8 Metern) 4 Sekunden für die Ausgabe benötigt, während das etwas kürzere zweite Sprachmitteilungselement (in 150 Metern) in 3 Sekunden ausgegeben werden kann. Das kürzeste Sprachmitteilungselement (Gleich), das weniger Informationsgehalt enthält, benötigt nur 1 Sekunde für die akustische Ausgabe. Steht genügend Zeit für die Sprachausgabe zur Verfügung, kann also die erste Alternative der drei möglichen Sprachmitteilungselemente ausgegeben werden, während bei einem unmittelbar bevorstehenden Manöver das kürzeste Sprachmitteilungselement verwendet werden sollte.

## Patentansprüche

1. Verfahren zum Betrieb eines Navigationsgeräts, umfassend - eine Eingabeeinrichtung, an der Bedienerbefehle und/oder Ortsangaben, insbesondere Startpunkte und/oder Zielpunkte, eingegeben werden können,
- eine Wegenetzdatenbank,
- eine Routenberechnungseinheit zur Berechnung einer geplanten Route unter Berücksichtigung der Ortsangaben und der Wegenetzdatenbank, wobei die Route vom Startpunkt zum Zielpunkt führt,
- eine Signalempfangseinheit zum Empfang von Positionssignalen, insbesondere GPS-Signalen,
- eine Positionsermittlungseinheit, die die aktuelle Position aus den Positionssignalen bestimmt,
- ein Sprachausgabemodul, das in Abhängigkeit vorgegebener Randbedingungen eine Sprachmitteilung, insbesondere Manöveranweisungen, durch Kombination von zumindest zwei Sprachmitteilungselementen erzeugen und akustisch ausgeben kann,
**dadurch gekennzeichnet,**
**dass** vor der akustischen Ausgabe der Sprachmitteilung die zu kombinierenden Sprachmitteilungselemente analysiert werden, wobei die Sprachmitteilung gemäß vorgegebenen Priorisierungsregeln in Abhängigkeit des Analyseergebnisses verändert wird.

2. Verfahren nach Anspruch 1,
**dadurch gekennzeichnet,**
**dass** zumindest einem Sprachmitteilungselement ein Priorisierungsparameter zugeordnet ist, wobei vor der akustischen Ausgabe der Sprachmitteilung die Priorisierungsparameter der zu kombinierenden Sprachmitteilungselemente analysiert werden, und wobei die Sprachmitteilung gemäß vorgegebenen Priorisierungsregeln in Abhängigkeit der Priorisierungsparameter verändert wird.

3. Verfahren nach Anspruch 1 oder 2,
**dadurch gekennzeichnet,**
**dass** zur Veränderung der Sprachmitteilung zumindest ein Sprachmitteilungselement aus der Sprachmitteilung gelöscht wird.

4. Verfahren nach Anspruch 1 oder 2,
**dadurch gekennzeichnet,**
**dass** zur Veränderung der Sprachmitteilung zumindest ein Sprachmitteilungselement in der Sprachmitteilung durch ein anderes, insbesondere kürzeres, Sprachmitteilungselement ersetzt wird.

5. Verfahren nach Anspruch 1 oder 2,
**dadurch gekennzeichnet,**
**dass** zur Veränderung der Sprachmitteilung zumindest ein Sprachmitteilungselement in der Sprachmitteilung verändert wird.

6. Verfahren nach einem der Ansprüche 1 bis 5,
**dadurch gekennzeichnet,**
**dass** zumindest eine Priorisierungsregel eine vom Benutzer veränderbare, im Navigationsgerät gespeicherte Benutzereinstellung beinhaltet, wobei die Sprachmitteilung in Abhängigkeit der Benutzereinstellung verändert wird.

7. Verfahren nach einem der Ansprüche 1 bis 6,
**dadurch gekennzeichnet,**
**dass** zumindest eine Priorisierungsregel eine vom Benutzer unveränderbare, im Navigationsgerät gespeicherte Herstellereinstellung beinhaltet, wobei die Sprachmitteilung in Abhängigkeit der Herstellereinstellung des Prozessparameters verändert wird.

8. Verfahren nach einem der Ansprüche 1 bis 7,
**dadurch gekennzeichnet,**
**dass** zumindest eine Priorisierungsregel einen Prozessparameter des Navigationsgeräts beinhaltet, wobei die Sprachmitteilung in Abhängigkeit dieses Prozessparameters verändert wird.

9. Verfahren nach einem der Ansprüche 1 bis 8,
**dadurch gekennzeichnet,**
**dass** zumindest ein Sprachmitteilungselement einer bestimmten Ausgabeposition zugeordnet ist, insbesondere eine positionsbezogene Manöveransage, wobei die verbleibende Fahrzeit, die für die Fahrt von der aktuellen Position bis zur Ausgabeposition des Sprachmitteilungselements benötigt wird, prognostiziert und als Prozessparameter zur Veränderung der Sprachmitteilung ans Sprachausgabemodul weitergeleitet wird.

10. Verfahren nach Anspruch 9,
**dadurch gekennzeichnet,**
**dass** die verbleibende Fahrzeit mit der zur akustischen Ausgabe der Sprachmitteilung erforderlichen Ausgabezeit oder mit den zur akustischen Ausgabe einzelner Sprachmitteilungselemente erforderlichen Ausgabezeiten verglichen und die Sprachmitteilung in Abhängigkeit vom Vergleichsergebnis verändert wird.

11. Verfahren nach Anspruch 9,
**dadurch gekennzeichnet,**
**dass** die zur akustischen Ausgabe der Sprachmitteilung erforderliche Ausgabezeit oder die zur akustischen Ausgabe einzelner Sprachmitteilungselemente erforderlichen Ausgabezeiten als unhörbarer Teil der Sprachmitteilung abgespeichert werden.

12. Verfahren nach Anspruch 9 oder 10,
**dadurch gekennzeichnet,**
**dass** als Priorisierungsparameter quantifizierte Priorisierungswerte, insbesondere diskrete Prioritätsstufen, verwendet werden, wobei bei der Analyse der Priorisierungswerte ein Größenvergleich zwischen den Priorisierungswerten der Sprachmitteilungselemente durchgeführt wird.

13. Verfahren nach Anspruch 12,
**dadurch gekennzeichnet,**
**dass** alle aktuell auszugebenden Sprachmitteilungselemente in einem Zwischenspeicher zwischengespeichert werden, wobei abhängig vom jeweiligen Priorisierungswert einzelne Sprachmitteilungselemente aus dem Zwischenspeicher gelöscht werden oder die Reihenfolge der akustischen Ausgabe der im Zwischenspeicher zwischengespeicherten Sprachmitteilungselemente verändert wird.

14. Verfahren nach Anspruch 13,
**dadurch gekennzeichnet,**
**dass** bei jeder Zwischenspeicherung eines neuen Sprachmitteilungselements automatisch die Priorisierungsparameter aller im Zwischenspeicher vorhandenen Sprachmitteilungselemente analysiert werden.

15. Verfahren nach einem der Ansprüche 1 bis 14
**dadurch gekennzeichnet,**
**dass** einzelnen Sprachmitteilungselementen ein Null-Priorisierungswert zugeordnet wird, durch den die akustische Ausgabe dieser Sprachmitteilungselemente unterdrückt wird.

16. Verfahren nach Anspruch 15,
**dadurch gekennzeichnet,**
**dass** durch Benutzereinstellung die akustische Ausgabe optionaler Sprachmitteilungselemente, beispielsweise Straßennamen, **dadurch** unterdrückt wird, dass diesen optionalen Sprachmitteilungselementen in Abhängigkeit der Benutzereinstellung ein Null-Priorisierungswert zugeordnet wird.

17. Verfahren nach Anspruch 15,
**dadurch gekennzeichnet,**
**dass** die akustische Ausgabe von Sprachmitteilungselementen in einem einer bestimmten Landessprache zugeordneten Sprachsynthesemodul synthetisiert wird, wobei Sprachmitteilungselementen, die einer anderen Landessprache zugeordnet sind, ein Null-Priorisierungswert zugeordnet wird.
